Europäisches Patentamt

European Patent Office

Office européen des brevets

(19)

(11) Publication number: **0 095 385**
**A2**

## (12) EUROPEAN PATENT APPLICATION

(21) Application number: 83303015.8

(22) Date of filing: 25.05.83

(51) Int. Cl.³: **A 01 G 5/04**

(30) Priority: 26.05.82 IE 1255/82

(43) Date of publication of application:
30.11.83 Bulletin 83/48

(84) Designated Contracting States:
AT BE CH DE FR GB IT LI LU NL SE

(71) Applicant: INSTITUTE FOR INDUSTRIAL RESEARCH
AND STANDARDS
Ballymun Road
Ballymun, Dublin 9(IE)

(72) Inventor: O'Dovovan, Maureen
155 Ardlea Road
Artane Dublin 5(IE)

(72) Inventor: Marchant, Nicholas George
Private Flat Kilkenny Design Workshops
Kilkenny County Kilkenny(IE)

(72) Inventor: Brown, Aynsley Maxwell
Apartment 27 Johnstown House Johnstown Park
Glasnevin Dublin 11(IE)

(72) Inventor: St Clair Hood, Oliver
11 Chapel Lane
Kilkenny County Kilkenny(IE)

(72) Inventor: Jenkins, John Roland
Barleyfield Annamut
Bennettsbridge County Kilkenny(IE)

(72) Inventor: Delaney, Richard Patrick
Tarsus Strand Road
Portmarnock County Dublin(IE)

(74) Representative: Ayers, Martyn Lewis Stanley et al,
J.A. KEMP & CO. 14 South Square Gray's Inn
London, WC1R 5EU(GB)

(54) Mounting member for a flower.

(57) A mounting member for a flower comprises a holder (1,20,30,45,65,70,77,90,100,110) for clasping a flower (2,19,34,52,74,76,104,112). In one construction the holder 1 comprises a pair of interconnected jaws (4,5) injection moulded from plastics material and a wire stem (10) extending from the jaws. The jaws are splayed apart to receive a stem or calyx of the flower and when released clasp the flower to hold it in position. The jaws are retained in a position clasping the flower therebetween either by the resilience of the jaws themselves or by a separate locking means integral (36,37,66,67) or as a separate item such as a rubber O-ring. The holders may be mounted on or integrally moulded with a base member 121, 141 to form a mounting apparatus for a bridal bouquet 120 or a wreath 140.

The mounting members are inexpensive, do not damage flowers and allow the time required for preparing buttonholes or flower arrangements to be considerably reduced over presently known wiring methods.

Fig.1

- 1 -

## MOUNTING MEMBER FOR A FLOWER

The present invention relates to a mounting member for a flower of the type comprising a receiving means for a flower.

When mounting flowers particularly into button holes or arrangements for weddings or funerals it is generally necessary to replace the natural stem of the flower by a false stem. This is due to the fact that the natural stem of the flower is not sufficiently pliable to allow the arrangement to "sit" correctly.

Conventional mounting members for flowers, for example, in wreaths, bouquets, button holes or head-dresses generally comprise a stub wire which is used to strengthen or replace the natural stem. A finer more pliable, silver reel wire is also used to reinforce petals of delicate flowers and for binding wired flowers to each other and into flower arrangements. The methods employed for mounting flowers in this manner are generally referred to as wiring.

One simple method of wiring which is used particularly for wiring heavy headed and firm stemmed flowers internally is to push a stub wire into the stem of the flower. In some cases the stem is inserted through the centre of the flower head and a hook formed at the free end of the wire to hold it in position in the stem. This latter method is used particularly with flowers having hollow stems and thick centres.

In another method of wiring used particularly for fine, brittle or damaged stems the stem is cut leaving only about 50 mm of stem below the head, and wired externally. If the stem is firm a single stub wire may be inserted however, in most cases the stems are relatively soft and delicate and are wired by inserting a wire transversely through the base of the lower head leaving a short and a long end which are bent down to lie parallel with the longitudinal axis of the stem. The ends of the wire are twisted in loops around the stem before being finally bound with a self-adhesive florist tape (also called gutta-percha or guttering tape).

Another method of wiring which is particularly used for flowers which are too fragile to pierce with a stub wire involves bending a stub wire into a hair pin-shaped hook at one end which is placed just under the flower head and the other long end of the wire is then twisted around the short end and the stem to form a false stem. For supporting heavy flowers the wires may be bent into two equal halves which are twisted around each other a number of times before leading both down parallel to the stem.

In a further method which is used particularly for wiring flowers in which the stem has been totally removed two wires are inserted into the base of the flower head or calyx at right angles to each other to form four free ends which are bent down through 90° and the wires twisted together to form a false stem.

All these wiring methods are time consuming even for skilled florists. It has been estimated, for example, that a florist takes up to one hour to make a single wedding bouquet or wreath having 30 to 40 flowers. Because these bouquets and wreaths must be made up as required from fresh flowers it will be appreciated that considerable bottlenecks may occur.

In addition, since the wires have to be threaded through the flower, damage may occur particularly with more delicate flowers thus leading to wastage.

Further, when a stub wire is inserted into the stem there is a tendancy for the wire to slip along the stem with consequent loss of strength.

There is therefore, a need for a mounting member for a flower which will provide a solution to the problems of

- 4 -

prior art mounting members. The present invention provides a solution in that the receiving means for a flower is a holder for clasping portion of a flower.

The advantages of the invention are that a mounting member which may be readily easily and quickly used even by an unskilled person is provided. In addition, the same mounting member may be used for holding a range of flower sizes with good holding power.

Preferably, the holder includes an elongate member extending from the holder to form a stem.

The advantage of this feature of the invention is that it allows the mounting member to be used not only for buttonholes but also in making arrangements for bouquets, wreaths, head-dresses and the like.

In one embodiment of the invention the holder comprises at least two interconnected jaws, at least one jaw being movable relative the other jaw to receive and clasp portion of a flower therebetween.

The advantage of this feature is that a relatively simple construction of holder is provided which can accommodate varying sizes of flower. In addition, the holder can be easily manufactured, for example, by injection moulding from a plastics material.

Typically the jaws are biased to clasp portion of a flower therebetween.

The particular advantage of this feature is that positive retention of the flower in the holder is achieved without the requirement of a locking means either integral with or separate from the jaws. This leads to a holder which is relatively inexpensive to manufacture and easily operated single handed.

In an alternative construction a locking means is provided for retaining the jaws in a position clasping portion of a flower therebetween.

The advantage of this feature is that the jaws are forced into engagement with the flower to clasp it therebetween.

The locking means may be integral with the holder and comprise complementary interengagable formations provided in the jaws.

The advantage of this feature is that the locking means may be relatively easily formed and because it is integral with the holder allows the holder to be operated single handed.

Alternatively, the locking means is provided by a resilient ring for engagement around the jaws.

The advantage of this feature is that the flower is positively clasped between the jaws which are locked together by the ring.

In one embodiment of the invention the jaws are of a deformable material.

The advantage of this feature is that the jaws may be easily deformed to clasp varying sizes of flowers therebetween.

In another embodiment of the invention the holder comprises a cup member of a deformable material.

The advantage of this feature is that it provides a holder which is relatively easy to manufacture, for example, from a mesh material which may be used to grip varying sizes of flower.

In a further embodiment of the invention the holder comprises a sleeve for clasping a flower.

The advantage of this feature is that it provides a holder which is cheap to manufacture and which can positively clasp the flower along a relatively large portion of its length to give good support.

In one version of this embodiment of the invention the sleeve comprises a tube of resilient material for clasping portion of a flower.

The particular advantage of this feature is that the sleeve provides a friction surface to grip against the flower giving good support. Because the sleeve is of a resilient material it may be used for varying sizes of flowers. It is also inexpensive to manufacture.

In an alternative version of this embodiment of the invention the sleeve is formed from a flap for wrapping around the flower adjacent the head, at least a portion of the flap adjacent the free end being adapted for bonding to another portion of the flap.

The advantage of this feature is that varying sizes of flowers are clasped over a wide area of the circumference of the flower. In addition, the flap is easily and quickly operated, simple wrapping being required. Further, the flap may be easily bonded to a stem such as a wire stem to which the flower may be clasped.

Preferably the flap is of a self-amalgamating material.

The particular advantage of this feature is that no adhesive is required and the material may be easily deformed to closely follow the contours of the flower clasping it over a large area. In addition, with a stem such as a wire stem the flap may be bonded to the stem by merely wrapping it around the stem. Further, self-amalgamating material such as paper or a shrink-wrap plastics film are relatively cheap, widely available and easily cut into the required shapes and consequently the manufacturing costs are relatively low.

In another embodiment of the invention a reservoir means is provided in the holder.

The advantage of this feature is that water may be accommodated in the holder to prevent the flowers drying up and consequently prolonging the life of the flower, in use.

The invention also provides a mounting apparatus for flower arrangement incorporating a mounting member according to the invention.

The advantage of this aspect of the invention is that it provides a mounting apparatus for floral arrangements such as a wreath, bouquet or head-dress which is relatively easily manufactured, inexpensive and quick to use.

The invention will be more clearly understood from the following description of some preferred embodiments thereof given by way of example only with reference to the accompanying drawings in which:-

Fig. 1 is a perspective view of a mounting member for a flower according to the invention,

Fig. 2 is a plan view of the mounting member of Fig. 1,

Fig. 3 is a longitudinal sectional view of the mounting member of Fig. 1 clasping a flower,

Fig. 4 is a perspective view of a mounting member according to another embodiment of the
invention,

Fig. 5 is a plan view of the mounting member of
Fig. 4,

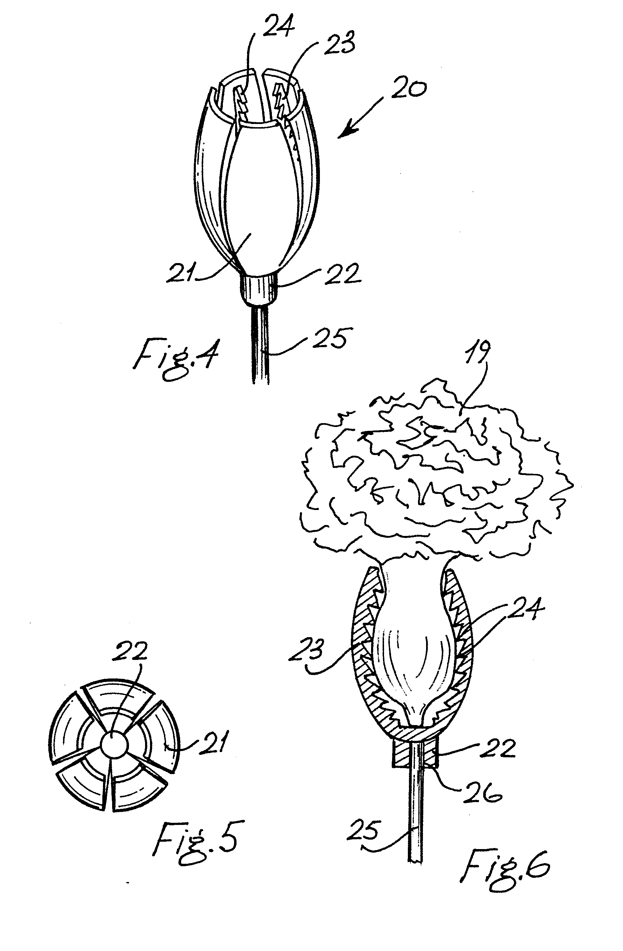

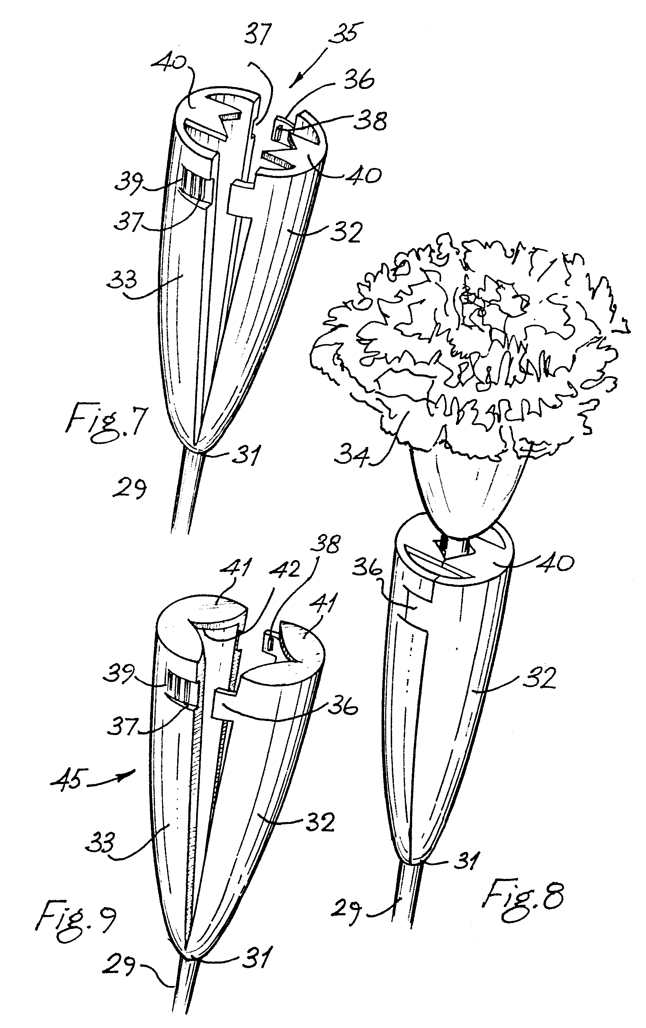

Fig. 6 is a longitudinal sectional view of the
mounting member of Fig. 4, with a flower in position,

Fig. 7 is a perspective view of a mounting
member according to a further embodiment of the
invention illustrated in an open position,

Fig. 8 is a perspective view of the mounting
member of Fig. 7 in a closed position clasping
a flower.

Fig. 9 is a perspective view of a mounting member
for a flower according to another embodiment of
the invention,

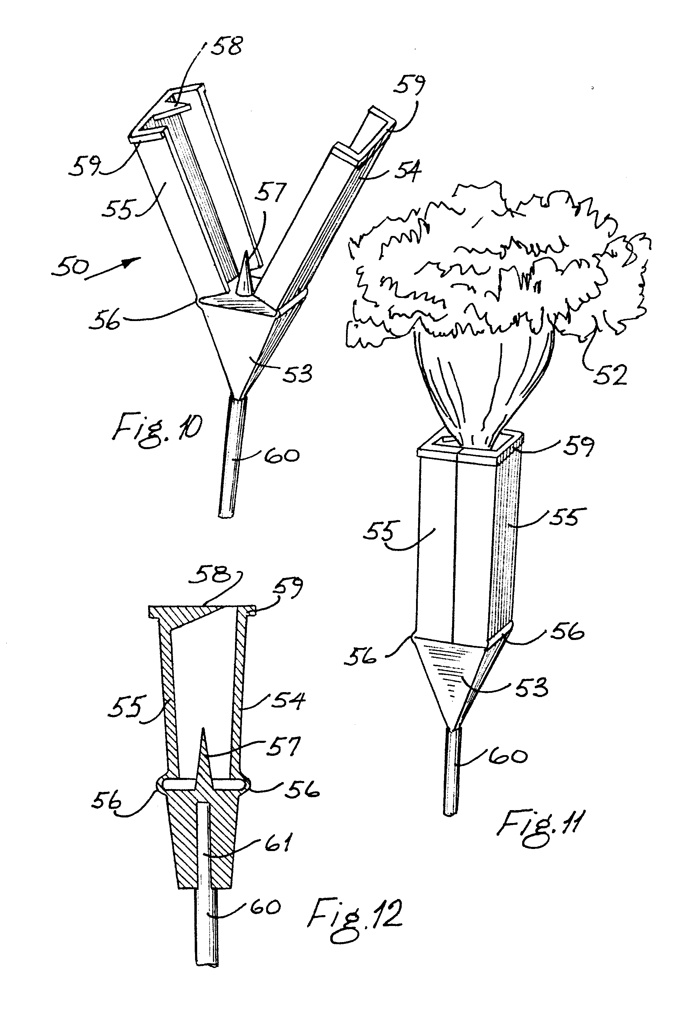

Fig. 10 is a perspective view of a mounting  member
for a flower according to a further embodiment of
the invention illustrated in an open position,

Fig. 11 is a perspective view of the mounting member
of Fig. 10, in a closed position clasping a flower,

Fig. 12 is a longitudinal sectional view of the mounting member of Figs. 10 and 11,

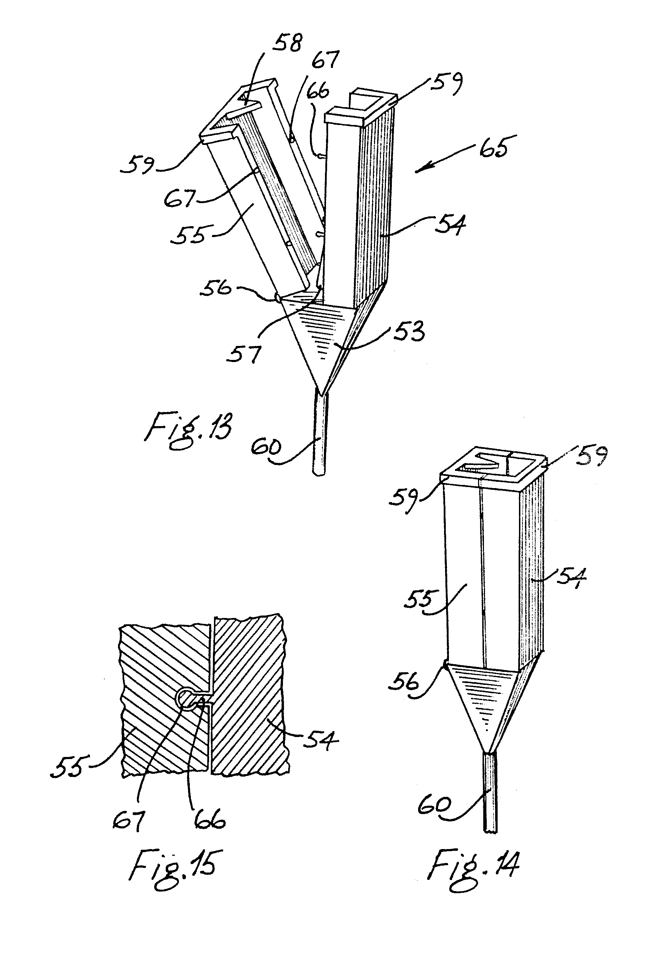

Fig. 13 is a perspective view of a mounting member according to a still further embodiment of the invention in an open position,

Fig. 14 is a perspective view of the mounting member of Fig. 13 in a closed position,

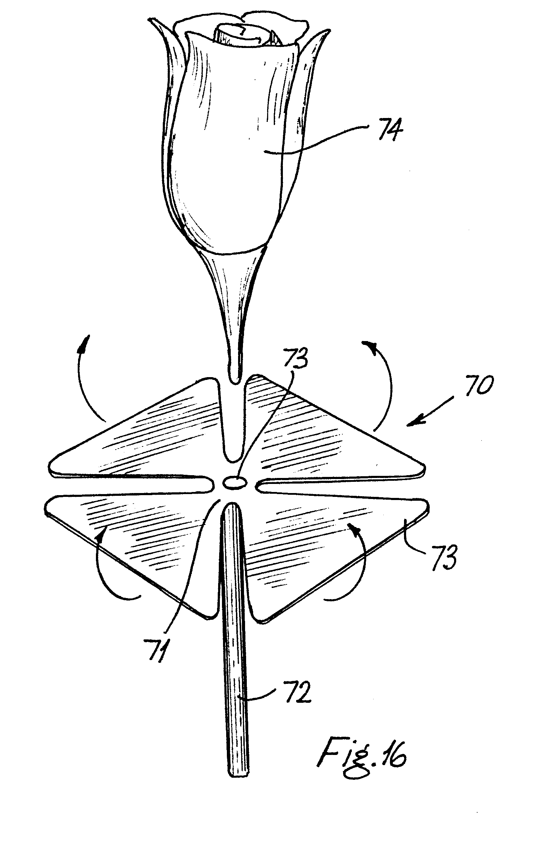

Fig. 15 is a sectional view of a detail of the mounting member of Figs. 13 and 14,

Fig. 16 is a perspective view of a mounting member according to another embodiment of the invention illustrated in an open position,

Fig. 17 is a perspective view of a mounting member according to a further embodiment of the invention illustrated with a flower,

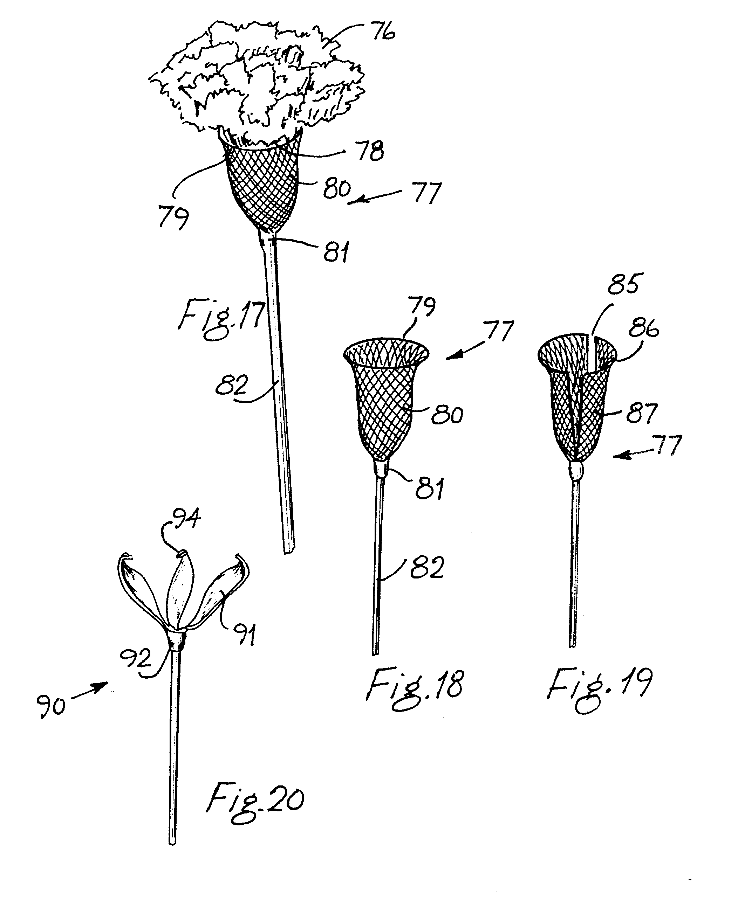

Fig. 18 is a perspective view of a mounting member of Fig. 17 without the flower,

Fig. 19 is a perspective view of a mounting member according to a further embodiment of the invention,

Fig. 20 is a perspective view of a mounting member

- 12 -

according to a still further embodiment of the invention,

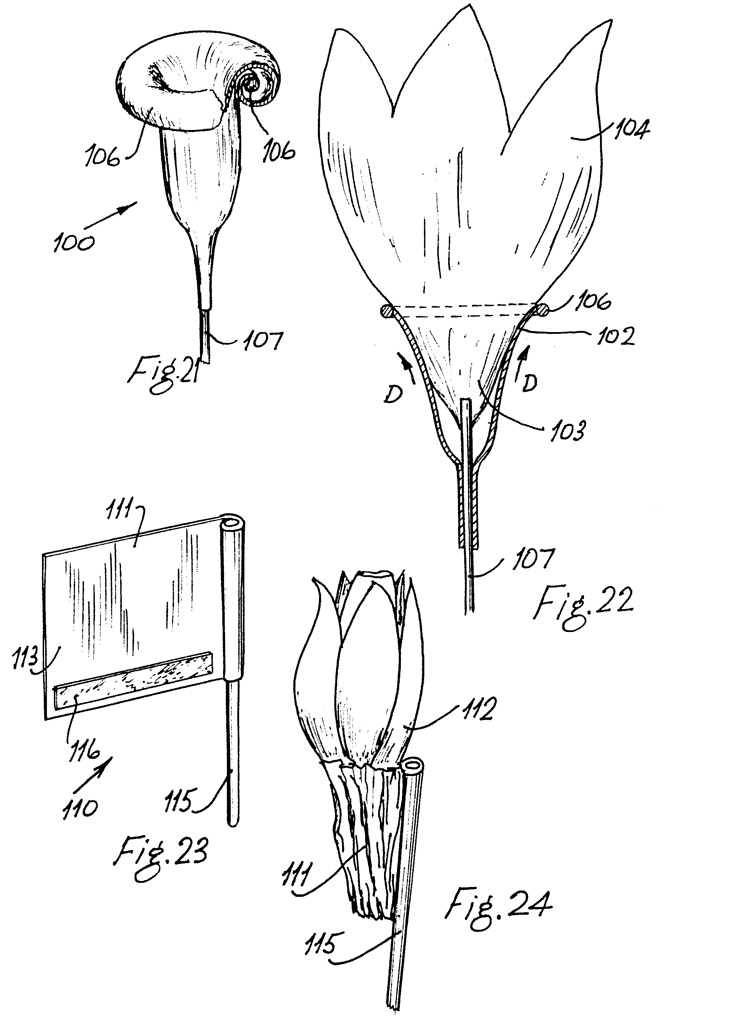

Fig. 21 is a perspective partially cut-away view of another mounting member according to the invention,

Fig. 22 is a side partly sectional view of the mounting member of Fig. 21 illustrated with a flower,

Fig. 23 is a perspective view of a mounting member according to a further embodiment of the invention,

Fig. 24 is a perspective view of the mounting member of Fig. 23 illustrated with a flower,

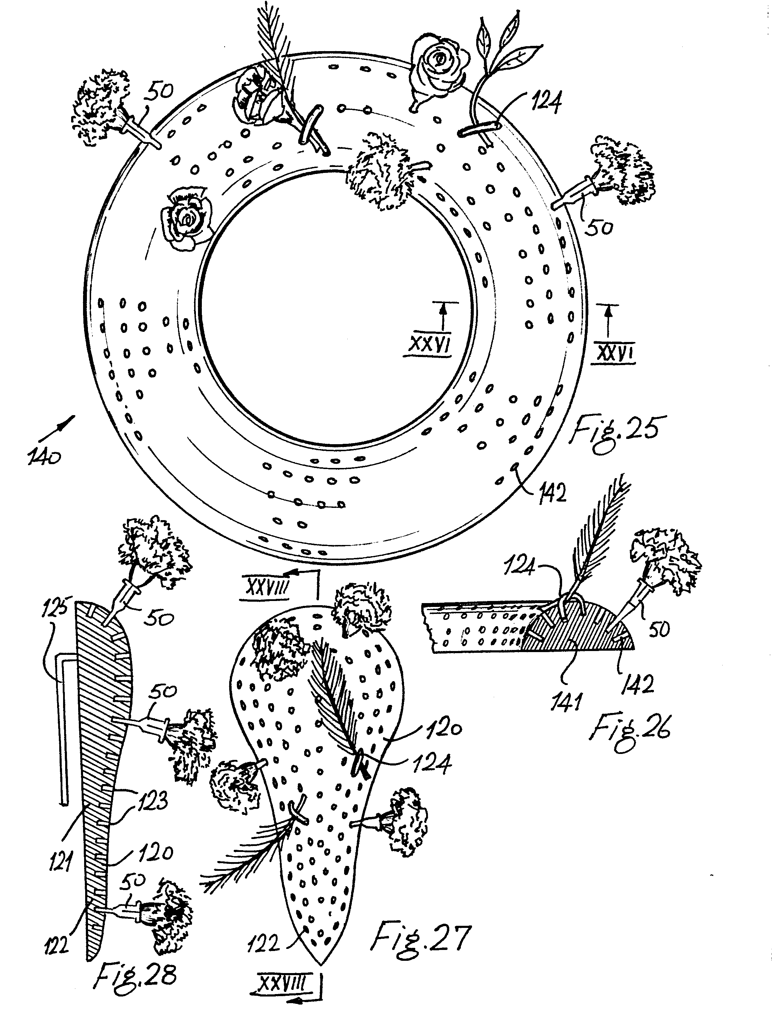

Fig. 25 is a perspective view of a mounting apparatus for a flower arrangement,

Fig. 26 is a side sectional view in the direction of the arrows XXVI-XXVI in Fig. 25,

Fig. 27 is a perspective view of a mounting apparatus for a flower arrangement according to another embodiment of the invention, and

Fig. 28 is a sectional view in the direction of the arrows XXVIII-XXVIII in Fig. 27.

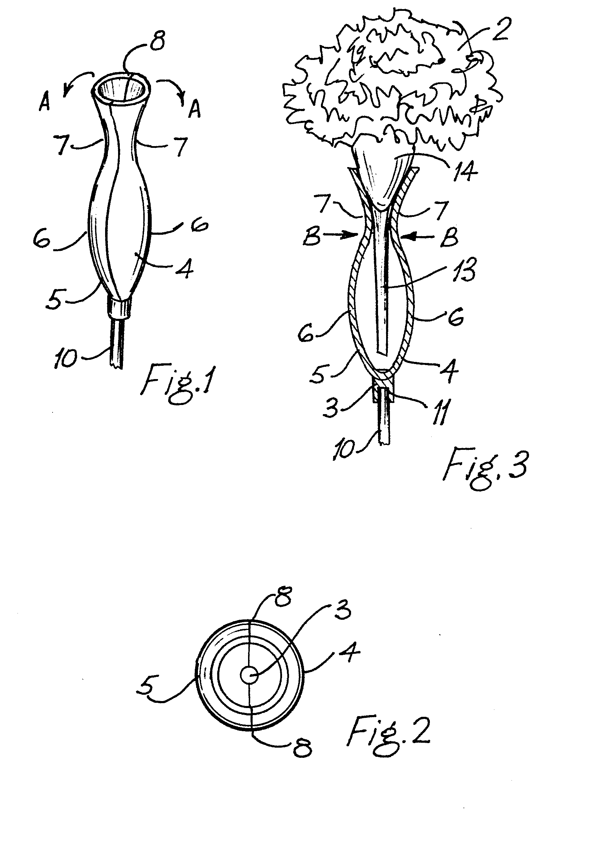

Referring to the drawings and initially to Figs. 1 to 3 thereof, there is illustrated a mounting member according to the invention for a flower 2. The mounting member comprises a receiving means formed by a holder indicated generally by the reference numeral 1 for clasping the flower 2. The holder 1 comprises a base portion 3 of plastics material and a pair of jaws 4,5 also of plastics material integrally moulded with the base portion. Each of the jaws 4,5 is of S-shape when viewed in longitudinal section and comprises a lower convex portion 6 and an interconnected upper concave portion 7. The jaws 4,5 are biased by the resilience of the plastics material to abut each other along their side marginal edges 8, in the closed position illustrated in Fig. 1. In addition, the upper concave portions 7 are urged in the direction of the arrows B into abutting relationship in the closed position to clasp portion of the flower 2 therebetween. An elongate member formed by a wire stem 10 secured in a bore 11 in the base portion 3 may be subsequently used for securing the mounted flower to a framework for a bouquet or wreath or for use when the flower is mounted for a buttonhole.

The uppermost end of each convex portion 7 may be chamfered to follow the contours of the calyx or underside of the flower and hence blend in with the overall shape of the flower.

In use, downward pressure of a thumb and forefinger is applied to splay the jaws 4,5 apart in the direction of the arrows A to receive a flower. The stem 13 of the flower 2 to be mounted is cut below the calyx 14 leaving a sufficient amount of stem for accommodation between the jaws 4,5.

The principal advantages of the mounting member according to this aspect of the invention are that locking means are not required to hold the flower in position clasped in the jaws. The particular shape of the jaws and the resilience of the material is used to bias the jaws into a closed position to clasp portion of the flower.

Referring now to Figs. 4 to 6 there is illustrated a mounting member for a flower 19 according to another embodiment of the invention. The mounting member comprises a holder indicated generally by the reference numeral 20 formed from a plurality, in this case five jaws 21 of plastics material interconnected by a base portion 22 also of a plastics material. An elongate member formed by a wire stem 25 fixed in a bore 26 in the base portion is provided for subsequently securing the mounted flower to a framework or for a buttonhole. Each of the jaws 21 is of convex shape when viewed in side section and includes an inwardly projecting flower engaging flange portion 23 extending axially along each jaw 21. Each flange portion 23 is serrated to form teeth or spikes 24 for engagement against the calyx and/or stem of the flower 19 to retain it in position in the holder.

The holder according to this aspect of the invention is used in a similar manner to the holder described above with reference to Figs. 1 to 3. The jaws 21 being splayed apart by manual pressure to receive a flower and being biased by the resilience of the material into an engagement position clasping the flower so that at least some of the teeth 24 engage against the flower calyx and/or stem. Alternatively the jaws may be splayed apart by the calyx as it is inserted.

In this case a separate locking means is not required for retaining the jaws in the closed position clasping the flowers therebetween. The greater the number of jaws that are employed the larger the surface area of contact between the jaws and flower and consequently the more positively the flower will be clasped in the holder.

Referring now to Figs. 7 and 8 there is illustrated a mounting member for a flower according to another embodiment of the invention. The mounting member comprises a holder indicated generally by the reference numeral 30 which is formed from a base portion 31 of plastics material and a pair of jaws 32, 33 also of plastics material integrally connected to the base portion 31. An elongate member formed by a plastics stem 29 integrally moulded with the base portion 31 is provided for subsequently securing the mounted flower to a framework or buttonhole. The jaws 32, 33 are of semi-circular channel-shaped construction, the interior dimensions of which substantially define a diameter of a stem of a flower 34 to be mounted. A locking means indicated generally by the reference numeral 35 is provided for retaining the jaws in the closed or locked position illustrated in Fig. 8. The locking means 35 in this case comprises a pair of male lugs 36 extending sidewardly from one jaw 32 to engage in complementary slots 37 provided in the other jaw 33. The inner face of each male lug 36 is formed with a plurality of spaced-apart teeth 38 to engage with complementary grooves 39 in the slot 37 as the jaws 32, 33 are pressed together. A retaining fork 40 is provided on each jaw 32, 33 to clasp a stem in position in the holder 30. Each fork 40 is relatively narrow in cross-section to engage against the stem of the flower when the jaws are closed to clasp it in position in the holder. It will be appreciated that because the forks 40 are relatively thin they are easily deformed and hence the risk of damage to the flower stem as the jaws are closed is minimised.

In use, the jaws are splayed apart to receive a flower by disengaging the lugs 36 from the slots 37. When the flower 34 is inserted the jaws are then pressed towards each other so that the forks 40 engage the stem of the flower to clasp it in position in the holder and the teeth 38 on the lugs 36 engage in the complementary grooves 39 in the slot 37 to lock the jaws together.

Referring to Fig. 9 there is illustrated a mounting member according to another embodiment of the invention. The mounting member is formed from a holder 45 substantially similar to that described above with reference to Figs. 7 and 8 and like components are identified by the same reference numerals. In this case, instead of a retaining fork 40 on each jaw 32, 33 each jaw 32, 33 is partially closed at its upper end by a retaining strip 41 having a triangulated cut-out portion 42 for engagement against a flower calyx or stem to clasp the flower in position in the holder. It will be appreciated that because the strip 41 is of relatively thin cross-section it may be easily deformed to engage against the flower to clasp it in position.

The particular advantage of this type of the locking means used in these holders 30,45 is that the jaws may be relatively easily locked in any desired position and consequently the holder is particularly suitable for a range of sizes of flowers.

Referring now to Figs. 10 to 12 there is illustrated a mounting member according to another embodiment of the invention formed by a holder indicated generally by the reference numeral 50 for mounting a flower 52. The mounting member 50 comprises a base 53 of plastics material and a receiving means, in this case a pair of jaws 54 and 55 also of plastics material, hinged to the base 53 by a plastics hinge 56 integrally moulded with the jaws 54 and 55 and base 53. The jaws 54 and 55 are of channel-shaped construction, the interior dimensions of which substantially define a diameter of a stem of the flower 52 to be mounted. A centering spike 57 is provided on the base 53 and locates and retains a reservoir means (not shown) such as florists foam, for example, that sold under the trade name "OASIS" in position to receive water to keep the flower 52 fresh. A retaining spike 58 inwardly projecting at the free end of the jaw engages the stem of the flower 52 when the jaws 54, 55 are drawn together. An elongate member formed by a wire 60 secured in a bore 61 in the base 53 is provided to allow the mounted flower to be secured to a framework, for example, a bouquet. The jaws 54 and 55 are locked into the closed position by a locking means, which in this case is separate from the jaws and comprises a resilient rubber O-ring (not shown) engagable around the jaws 54 and 55. Reinforcing flanges 59 act as a stop against which the O-ring can abut.

In use, the jaws 54 and 55 are splayed apart to receive the flower 52. The stem of the flower 52 to be mounted is cut below the calyx leaving a sufficient amount of stem for accommodation between the jaws 54 and 55. The end of the stem is then pressed onto the centering spike 57 and the jaws 54 and 55 closed together to clasp the flower stem therebetween. As the jaws are closed the retaining spike 58 engages against the stem to help retain the flower 52 in position in the holder 50. The O-ring is then passed over the jaws 54 and 55 to lock them in the closed position clasping the stem.

Referring to Figs. 13 to 15 there is illustrated a mounting member according to another embodiment of the invention formed from a holder indicated generally by the reference numeral 65. The holder is similar to that described above with reference to Figs. 10 to 12 and like components are identified by the same reference numerals. In this embodiment of the invention only one jaw 55 is hingedly connected to the base 53. The jaw 54 is integrally moulded with the base 53 and forms an extension thereof. The retaining spike 58 is provided on the hinge jaw 55. The locking means in this case comprises a pair of stud fasteners on each side of the jaws 54 and 55. Each stud fastener comprises a male member 66 projecting from the jaw 54 to engage with a complementary recess 67 in the jaw 55. The free end of each male member 66 is slightly enlarged to retain it locked in the complementary shaped recess 67. The stem 60 is of a plastics material and is integrally moulded with the base member 53.

- 21 -

In use, a flower 52 is mounted in this holder in the same manner as described with reference to the holder of Figs. 10 to 12.  The advantage of this particular mounting member is that because the jaw 55 is fixed to the base 53 the stem may be more easily centred on the centering spike 57.  In addition, the jaws may be relatively easily locked together by the fastening studs.

Referring now to Fig. 16 there is illustrated a mounting member according to a further embodiment of the invention. The mounting member comprises a holder 70 formed from a cross-shaped member 71 and an elongate member, in this case a wire stem 72 fixed to the member 71 by any suitable means such as a pin 72.  The cross-shaped portion 71 is formed from any suitable material such as fine guage wire mesh, foil, shrink-wrap plastic material or self-adhesive or self-amalgamating paper and comprises four interconnected arms 73 which may be folded up in the direction of the arrows C around the calyx and/or stem of a flower 74 and deformed around the flower to form jaws to clasp it in a desired position.

If desired, a locking means may be provided for retaining the arms in a position embracing the flower. The locking means may be of any suitable forms such as an elastic band wound around the arms 73 or an O-ring

similar to that described above.


Referring to Figs. 17 and 18 there is illustrated a mounting member according to a still further embodiment of the invention comprising a holder for receiving and clasping portion of a carnation 76. In this case the holder comprises a cup-shaped member 77 for embracing the calyx 78 of the carnation 76. The cup-shaped member 77 is of a deformable material formed by a wire loop 79 joined by a plastics or wire mesh material 80 to a base 81. A stem 82 of either plastics or wire material projects from the base 81. In this particular embodiment of the invention a reservoir means (not shown) is generally mounted in the base 81 of the cup-shaped member 77. The reservoir means may be of any suitable material such as florists foam, that is sold under the trade name "OASIS", cotton wool, felt or sponge impregnated with water to sustain life in the flower.


In use, the stem of the carnation 76 is inserted in the cup member 77 so that the cup member surrounds the calyx 78. The wire rim 79 is then deformed by squeezing to clasp the calyx 78 and retain the flower in position in the cup member 77.

Referring to Fig. 19 there is provided a mounting member according to another embodiment of the invention. This mounting member is substantially similar to that described with reference to Figs. 17 and 18 and like components are identified by the same reference numerals. In this case slits 85 are provided in opposite sides of the cup member 77 and the cup member 77 is formed by a pair of semi-circular wire hoops 86 joined by substantially vertical mesh wire 87 to the base portion 81.

In use, the flower is inserted into the cup member 77 and the semi-circular hoops are pressed together to clasp the calyx of the flower to retain it in position in the cup member. If desired, an additional locking means, such as a rubber band or resilient O-ring may be used to draw the jaws together to clasp the calyx.

Referring now to Fig. 20 there is illustrated a mounting member according to a further embodiment of the invention. In this case the mounting member comprises a holder 90 formed by three jaws 91 which diverge outwardly from a base 92. The jaws 91 are of steel and easily deformable although needless to say, the jaws could be of a plastics or any other suitable material. Retaining spikes 94 are provided on the free ends of each jaw 91 to engage the calyx of the flower. In use, the flower is inserted between the jaws 91 which are squeezed inwardly together so that the retaining spikes 93 engage the calyx of the flower.

Referring now to Figs. 21 and 22 there is illustrated a mounting member for a flower according to a still further embodiment of the invention. The mounting member comprises a holder indicated generally by the reference numeral 100 formed from a sleeve which in this case is a tube 101 of rubber or other resilient material having an enlarged portion 102 reinforced by a ring 106 at one end thereof for embracing portion of the underside of the head or calyx 103 of a flower 104. The enlarged portion 102 of the tube 101 may be coiled back into the position illustrated in Fig. 21. The other end of the tube 101 is clasped around an elongate member 107 of either plastics or wire material to form a false stem.

In use, the stem is removed from the flower 104 and the calyx 103 inserted into the tube 101 to engage the elongate member 107. The coiled enlarged portion 102 is then pushed and rolled upwards in the direction of the arrow D using a thumb and forefinger to clasp the calyx 103 or the underside of the flower 104.

The particular advantage of having an enlarged portion in the tube is that it allows various sizes of flowers to be accommodated.  Further, there is a large surface area of clasping between the holder and flower along the friction surface which is provided by the enlarged portion.

It is envisaged that in the case where the tube is of a rubber of similar material it may be reinforced in the area of the transition from the main body of the tube to the enlarged portion, for example, by a wire loop which may be provided either in the tube or outside the tube.  In addition or alternatively the tube may be reinforced by one or several lengths of elongate wire inserted in the tube to extend axially therealong.

Referring now to Figs. 23 and 24 there is illustrated another mounting member according to a still further embodiment of the invention.  The mounting member comprises a holder indicated generally by the reference numeral 110 comprising a flap 111 for wrapping around a flower 112 adjacent the head thereof.  The flap 111 is of a deformable material and at least a portion of the flap adjacent a free end 113 is adapted for bonding to another portion of the flap when wound around the flower 112 to receive and embrace it. In this case the flap is of a self-emalgamating material such as a self-emalgamating paper of plastics shrink-wrap material. The flap 111 is carried on an elongate member 115 of a wire or plastic material forming a false stem. The flap may be bonded to the stem 115 by any suitable means such as adhesives. A strip of felt 116 extends along the flap 111 to provide a reservoir means to keep the flower 112 fresh.

In use, the stem of the flower is removed and the calyx 116 mounted on the flap 111 adjacent the stem 114. The flap 111 is then drawn around the calyx 116 by gripping the free end 113 and wrapping it to embrace the calyx and hold it securely in place by deforming the flap 111. The holder may be further reinforced by a locking means such as a rubber band looped around the deformed flap.

The particular advantage of the mounting member according to this aspect of the invention is that it is inexpensive and simple to operate. Further, varying sizes of flower may be accommodated. In addition, since the flap is of a deformable material it may be arranged to closely follow the contours of the flower and hence provide an aesthetically pleasing holder.

Referring now to Figs. 25 and 26 there is illustrated a mounting apparatus 120 for a flower arrangement, also according to the invention. In this case, the mounting apparatus is for a bridal bouquet and comprises a base member 121 of plastics material and a plurality of mounting members (similar to those described with reference to Figs. 10 to 12). The mounting members are of a plastics material and integrally moulded with the base member 121 although only a few mounting members are illustrated. It can be seen from Fig. 24 that the base member is of a circular shape the top surface of which is curved in cross-section with a sidewardly projecting portion 122. This gives the desired shape for a bridal bouquet. A plurality of holes 123 are provided in the base member 121 to receive a staple 124 of spring steel. The staple may be used for attaching moss, maidenhair fern or other such like greenery to the base member. To attach, for example, the maidenhair fern to the base member 121, the legs of the staple 124 are squeezed and inserted in any desired pair of holes 123, thereby clamping the stem of the fern to the base member 121. The inherent resilience of the staple 124 retains it in position. A handle 125 of plastic material integrally moulded with the base member 121 is also provided.

In use, the maidenhair fern, moss or other suitable green material is mounted to the base member by means of the staples 24. Flowers are then mounted in the mounting members as described with reference to Figs. 10 to 12.

Needless to say, it will also be appreciated that any of the mounting members described with reference to any of Figs. 1 to 23 could also be mounted on the base member 121 by means of the wire stems. Indeed, it is envisaged that in certain cases, that the flowers may be mounted directly by their stems into the holes 123.

Referring now to Figs. 27 and 28 there is illustrated a mounting apparatus indicated generally by the reference numeral 140 for a flower arrangement also according to the invention, in this case a wreath. The apparatus comprises a base member 141 of plastics material having a plurality of mounting members 50 also of plastics material integrally moulded to the base 141. A plurality of holes 142 are provided to receive the staples 124 for securing the moss, maidenhair fern and the like.

It is envisaged that this apparatus could also be provided with a base member having a plurality of holes only and the mounting members would be mounted in the holes by means of their stems.

It will be appreciated that any of the mounting members described with reference to Figs. 1 to 24 could also be used in combination with the mounting apparatus described with reference to Figs. 25 to 28. It is also envisaged that the mounting members may be used in combination with any convenient construction of mounting apparatus. For example, mounting members could be used for the package and transportation of flowers in which case it is envisaged that a box provided with a base member having a plurality of mounting members projecting therefrom could be provided and the flowers mounted in the mounting members. The mounting apparatus may comprise a base member in any convenient shape which is in the shape of a horseshoe, door key or cushion or indeed any desired shape.

All the various embodiments of the invention which have been described above in detail have specific advantages which have been mentioned however, all the embodiments have the advantages of providing a mounting member which is relatively inexpensive to manufacture, is quick to use and gives good holding power with the minimum wastage. In addition, a range of flower sizes may be accommodated. Thus, the invention provides a mounting member which considerably reduces the time required to prepare buttonholes or any flower arrangements. In initial tests which have been conducted it has been found that the time required to prepare a bouquet or wreath containing 30 or 40 flowers is at least halved by using mounting members according to the invention rather than conventional wiring techniques.

It will further be appreciated that any or all of the specific features of the mounting members according to the specific embodiments of the invention may be used in any of the other embodiments described specifically above with reference to Figs. 1 to 24 or indeed in any other embodiments within the scope of the invention.

It will be appreciated that while various forms of mounting members comprising a receiving means formed from a holder for clasping a flower have been described above there are many other variations possible. For example, in the case of a holder comprising interconnected jaws the jaws may be opened as described above either by finger pressure or on insertion of portion of the stem or calyx of a flower or in an alternative construction by lateral pressure applied to the jaws to operate a hinge link mechanism. Indeed, the jaws may also be opened and closed by displacing them in a longitudinal direction, for example, along the stem to

- 31 -

operate an opening mechanism such as a hinge link mechanism. These comments apply particularly to holders made from a plastics material such as polypropylene however, it is envisaged that similar constructions may also be employed for any suitable material of construction.

It is envisaged that in general the mounting members described above with reference to Figs. 1 to 14 and 19 will be moulded from a plastics material preferably polypropylene of any suitable colour to blend in with the flower stem or flower head. In most cases, it is envisaged that the material will be of a dark green colour to blend in with the flower stem. In addition, the elongate member forming the wire stem will generally be covered in a dark green plastics PVC coating.

It will also be appreciated that the mounting member need not necessarily include an elongate member extending from the holder to form a stem. This is particularly the case with a mounting apparatus for floral arrangements in which case the holder may be integrally moulded with a base member. If an elongate member is provided it may be either of a malleable material such as a wire or plastics stem integrally moulded with the holder or subsequently attached to it, for example, by insertion in a bore in the base of the holder as
described above. The elongate member may also be of
a rigid material particularly if it is desired to use
the holder in forming buttonholes.

It will also be appreciated that the mounting members
according to the invention may be of any desired shape.
In particular, the holders illustrated in Figs. 10 to 12
and 13 to 15 may be substantially curved when viewed in
plan rather than rectangular to more closely follow and
blend with the contours of a flower.

It is envisaged that one modification to the mounting
members described above with reference to Figs. 7 and 8
would be to connect the fork portions 40 to the jaws 32,
33 by plastics hinges. In this case an inward pressure
on the jaws 32, 33 may be applied to cause the fork
portions 40 to press downwards to clasp a flower in
position.

It will also be appreciated that while the invention has
been described with reference to the mounting of fresh
flowers it may be used for any type of flower such as
dried and preserved flowers, pressed flowers, stencil
flowers, modelled and painted flowers, paper flowers,
fabric flowers, embroidered flowers or fir cones. The flowers, whether fresh or artificial may or may not be provided with a calyx or enlarged portion underneath the flower head. In the case of a flower without a calyx or one from which the calyx has been removed it may be mounted in a mounting member according to the invention either by the stem whether natural or artificial or indeed, particularly in relation to the embodiment described above with reference to Figs. 21 and 22 the mounting member may clasp portion of the head of the flower directly.

CLAIMS

1. A mounting member for a flower of the type comprising a receiving means for a flower, characterised in that the receiving means is a holder for clasping portion of a flower.

2. A mounting member as claimed in claim 1 characterised in that the holder includes an elongate member extending from the holder to form a stem.

3. A mounting member as claimed in claim 1 or 2 characterised in that the holder comprises at least two interconnected jaws at least one jaw being movable relative the other jaw to receive and clasp portion of a flower therebetween.

4. A mounting member as claimed in claim 3 characterised in that the jaws are biased to clasp portion of a flower therebetween.

5. A mounting member as claimed in claim 3 characterised in that a locking means is provided for retaining the jaws in a position clasping portion of a flower therebetween.

6.    A mounting member as claimed in claim 5 characterised in that the locking means is integral with the holder and comprises complementary interengagable formations provided on the jaws.

7.    A mounting member as claimed in claim 5 characterised in that the locking means is provided by a resilient ring for engagement around the jaws.

8.    A mounting member as claimed in claim 3 characterised in that the jaws are of a deformable material.

9.    A mounting member as claimed in claim 1 or 2 characterised in that the holder comprises a cup member of a deformable material.

10.    A mounting member as claimed in claim 1 or 2 characterised in that the holder comprises a sleeve for receiving and clasping a flower.

11.    A mounting member as claimed in claim 10 characterised in that the sleeve comprises a tube of resilient material for clasping portion of a flower.

12.    A mounting member as claimed in claim 10 characterised in that the sleeve is formed from a flap for wrapping around a flower adjacent the head, at least portion of the flap adjacent the free end thereof being adapted for bonding to another portion of the flap.

13.    A mounting member as claimed in claim 12 characterised in that the flap is of a self-amalgamating material.

14.    A mounting member as claimed in any of claims 1 to 13 characterised in that a water reservoir means is provided in the holder.

15.    A mounting apparatus for a flower arrangement incorporating a mounting member as claimed in any preceding claim.

Fig.1

Fig.2

Fig.3

0095385

1/9

0095385

Fig.4

Fig.5

Fig.6

0095385

Fig.7

Fig.8

Fig.9

Fig.10

Fig.11

Fig.12

Fig.13

Fig.15

Fig.14

74

73

70

73

71

72

Fig.16

Fig.17

Fig.18

Fig.19

Fig.20

Fig.21

Fig.22

Fig.23

Fig.24

9/9

Fig.25

140

142

XXVI

Fig.26

124

50

141    142

Fig.28

125

50

50

123

121    120

50

122

XXVIII

Fig.27

120

124

122

XXVIII